# EUROPÄISCHE PATENTANMELDUNG

(11) **EP 3 327 187 A1**
(43) Veröffentlichungstag der Anmeldung: **30.05.2018**
(21) Anmeldenummer: 17201832.7
(22) Anmeldetag: 15.11.2017
(51) Int. Cl.: D01H 4/10

(54) **ROTORTASSE UND OFFENEND-SPINNROTOR MIT EINER ROTORTASSE**

(30) Priorität: 23.11.2016 DE 102016122595
(71) Anmelder: Maschinenfabrik Rieter AG, 8406 Winterthur (CH)
(72) Erfinder: KÜBLER, Markus, 73312 Geislingen (DE); LOOS, Bernd, 73326 Deggingen (DE); RIEGER, Constantin, 73333 Gingen (DE)
(74) Vertreter: Bergmeier, Werner

(57) **Zusammenfassung**

Eine Rotortasse (1) weist eine Kupplungsvorrichtung (4) zur lösbaren Verbindung mit einem Rotorschaft (2) auf, wobei die Kupplungsvorrichtung (4) Verbindungsmittel (6) zur Drehmomentübertragung von dem Rotorschaft (2) auf die Rotortasse (1) und zur axialen Sicherung der Rotortasse (1) an dem Rotorschaft (2) und Zentriermittel (7) zur Zentrierung der Rotortasse (1) an dem Rotorschaft (2) umfasst. Die Zentriermittel (7) umfassen einen kegelstumpfförmigen Fortsatz (8) oder eine kegelstumpfförmige Aufnahme (10) an der Rotortasse (1). Alternativ können die Zentriermittel (7) wenigstens ein separat von den Verbindungsmitteln (6) ausgebildetes Zentrierelement (20) beinhalten, welches einen in der Rotortasse (1) festgelegten Zylinderstift (21) oder eine in der Rotortasse (1) angeordnete Zentrierbohrung (22) umfasst. Die Verbindungsmittel (6) umfassen dabei einen vorzugsweise zylindrischen Fortsatz (8) an der Rotortasse. Bei einem Offenend-Spinnrotor (14) mit einer Rotortasse (1) und mit einem Rotorschaft (2) sind der Rotorschaft (2) und die Rotortasse (1) über eine Kupplungsvorrichtung (4) wie beschrieben miteinander verbunden.

## Beschreibung

Die vorliegende Erfindung betrifft eine Rotortasse, in welcher ein Fasermaterial verspinnbar ist, mit einer Kupplungsvorrichtung zur lösbaren Verbindung mit einem dafür vorgesehenen Rotorschaft, wobei die Kupplungsvorrichtung wenigstens ein Verbindungsmittel zur Drehmomentübertragung von dem dafür vorgesehenen Rotorschaft auf die Rotortasse und zur axialen Sicherung der Rotortasse an dem dafür vorgesehenen Rotorschaft und wenigstens ein Zentriermittel zur Zentrierung der Rotortasse an dem dafür vorgesehenen Rotorschaft umfasst.

Ferner betrifft die Erfindung einen Offenend-Spinnrotor mit einer Rotortasse, in welcher ein Fasermaterial verspinnbar ist, und mit einem Rotorschaft, über welchen der Spinnrotor in einer Lagerung, insbesondere einer Magnetlagerung, abstützbar ist, wobei der Rotorschaft und die Rotortasse über eine Kupplungsvorrichtung lösbar miteinander verbunden sind und wobei die Kupplungsvorrichtung Verbindungsmittel zur Drehmomentübertragung zwischen der Rotortasse und dem Rotorschaft und zur axialen Sicherung der Rotortasse an dem Rotorschaft und Zentriermittel zur Zentrierung von Rotortasse und Rotorschaft umfasst.

Aus dem Stand der Technik ist es hinlänglich bekannt, eine Rotortasse und einen Rotorschaft zu einem Offenend-Spinnrotor zu verbinden. Derartige Spinnrotoren laufen mit Rotordrehzahlen von 150.000 1/min und höher, weshalb die Verbindung zwischen der Rotortasse und dem Rotorschaft äußerst zuverlässig sein muss. Zusätzlich zum hohen Halt der Rotortasse in dem Rotorschaft ist zur Wahrung der Garnqualität höchste Präzision gefordert, weshalb die Spinnrotoren bzw. die Rotortassen nach einer bestimmten Laufzeit gewechselt werden müssen. Insbesondere bei berührungslosen Lagerungen ist es jedoch aufwendig, den gesamten Spinnrotor mit dem Rotorschaft auszuwechseln, so dass häufig die Rotortassen lösbar mit dem zugehörigen Rotorschaft verbunden sind.

Einen Vorschlag zur Umsetzung einer lösbaren Verbindung beschreibt die EP 1 156 142 B1. Dabei weist die Rotortasse einen ferromagnetischen Ansatz auf, von dem ein Abschnitt der Zentrierung dient und ein zweiter Abschnitt mit einem Außenmehrkant zur Drehmomentübertragung versehen ist. Ein Permanentmagnet dient der axialen Sicherung. Die Herstellung der Rotortasse mit dem zweiteiligen Ansatz mit dem Außenmehrkant sowie des Rotorschafts mit dem korrespondierenden Innenmehrkant ist vergleichsweise aufwendig.

Eine Weiterentwicklung der vorbeschriebenen Kupplungseinrichtung zeigt die EP 2 730 686 B1. Dabei soll die Zentrierung zwischen Rotorschaft und Rotortasse verbessert werden, indem zwischen einer zylindrischen Bohrung des Rotorschafts und dem der Zentrierung dienenden Abschnitt des Ansatzes der Rotortasse eine Spielpassung vorgesehen ist. Weiterhin soll eine elastische Anordnung zwischen der Bohrung und dem zylindrischen Abschnitt vorgesehen sein.

Aufgabe der vorliegenden Erfindung ist es, eine Rotortasse sowie einen Offenend-Spinnrotor vorzuschlagen, welche einfach herstellbar sind und eine gute Zentrierung der Rotortasse an dem Rotorschaft ermöglichen.

Die Aufgabe wird gelöst mit den Merkmalen der unabhängigen Ansprüche.

Vorgeschlagen wird eine Rotortasse, in welcher ein Fasermaterial verspinnbar ist. Die Rotortasse weist eine Kupplungsvorrichtung zur lösbaren Verbindung mit einem dafür vorgesehenen Rotorschaft auf. Die Kupplungsvorrichtung umfasst wenigstens ein Verbindungsmittel zur Drehmomentübertragung von dem dafür vorgesehenen Rotorschaft auf die Rotortasse. Die Drehmomentübertragung zwischen der Rotortasse und dem dafür vorgesehenen Rotorschaft erfolgt vorzugsweise über eine formschlüssige Verbindung. Die Rotortasse ist gegenüber dem dafür vorgesehenen Rotorschaft verdrehsicher angeordnet, so dass zwischen diesen beiden Bauteilen eine rotatorische Relativbewegung verhindert wird. Weiterhin umfasst die Kupplungsvorrichtung wenigstens ein Verbindungsmittel zur axialen Sicherung der Rotortasse an dem dafür vorgesehenen Rotorschaft, das einteilig mit oder separat von dem Verbindungsmittel zur Drehmomentübertragung ausgebildet sein kann. Die Rotortasse ist durch das wenigstens eine Verbindungsmittel mit maximalem Halt an dem dafür vorgesehenen Rotorschaft arretiert. Zudem umfasst die Kupplungsvorrichtung wenigstens ein Zentriermittel zur Zentrierung der Rotortasse an dem dafür vorgesehenen Rotorschaft.

Nach einer ersten Ausführung der Rotortasse umfasst das Zentriermittel einen kegelstupfförmigen Fortsatz oder eine kegelstumpfförmige Aufnahme an der Rotortasse. Der Fortsatz ist vorzugsweise an der Rotortasse ausgebildet und die Aufnahme an dem dafür vorgesehenen Rotorschaft. Der Fortsatz korrespondiert mit der Aufnahme in Form einer Kegelbohrung, so dass die Rotortasse an dem Rotorschaft zentriert ist, wenn diese beiden Bauteile miteinander verbunden sind. Der Fortsatz der Rotortasse ist lösbar in die Aufnahme des Rotorschafts einsetzbar. Die Rotortasse und der dafür vorgesehenen Rotorschaft wirken durch den in die Aufnahme eingesetzten Fortsatz zusammen. Der Fortsatz und die Aufnahme sind vorzugsweise kegelstumpfförmig mit einem Kegelwinkel von 10° bis 30° ausgebildet. Der Kegelwinkel, insbesondere dessen Neigungswinkel, ist derart gewählt, dass dieser nicht selbsthemmend ist, so dass die Verbindung jederzeit leicht lösbar ist. Die kegelstumpfförmige Aufnahme bzw. der kegelstupfförmige Fortsatz bewirken eine besonders gute Zentrierung der Rotortasse an dem Rotorschaft und können dennoch in vergleichsweise einfacher Weise beispielsweise durch Drehen hergestellt werden.

Insbesondere bei einer Rotortasse mit einem kegelstumpfförmigen Fortsatz oder einer kegelstumpfförmigen Aufnahme ist es von Vorteil, wenn der Fortsatz einen Ansatz oder die Aufnahme eine Vertiefung aufweist. Der Ansatz oder die Vertiefung sind dabei vorzugsweise rotationssymmetrisch, insbesondere zylindrisch, ausgebildet. Der Ansatz kann dabei sowohl der verbesserten Führung der Rotortasse an dem Rotorschaft dienen. Ebenso kann der Ansatz jedoch auch die Integration weiterer Funktionen ermöglichen, ohne die Zentrierung bzw. den Kegelsitz zu beeinträchtigen. Beispielsweise kann der Ansatz ein- oder mehrkantig ausgebildet sein, um mit einer korrespondierenden Vertiefung des Rotorschafts, die ebenso ein- oder mehrkantig ausgebildet ist, zusammenwirken zu können. Dadurch wird eine zusätzliche Verdrehsicherung der Rotortasse gegenüber dem dafür vorgesehenen Rotorschaft zur Drehmomentübertragung geschaffen, während der kegelstumpfförmige Fortsatz oder die kegelstumpfförmige Aufnahme der Zentrierung dient.

Ist der Fortsatz kegelstumpfförmig ausgeführt, so ist es weiterhin von Vorteil, wenn der kegelstumpfförmige Fortsatz eine ringförmig umlaufende Erhebung, insbesondere einen Wulst, aufweist. Häufig kommt es nämlich aufgrund von Fertigungstoleranzen dazu, dass der kegelstumpfförmige Fortsatz und die korrespondierende, kegelstumpfförmige Aufnahme einen geringfügig unterschiedlichen Neigungswinkel aufweisen. Da bei der Verbindung zwischen der Rotortasse und dem Rotorschaft nur geringe axiale Spannkräfte aufgebracht werden können, können diese Fertigungstoleranzen nicht durch eine elastische Verformung des Fortsatzes und der zugehörigen Aufnahme ausgeglichen werden, so dass es über die Länge des Fortsatzes nur zu einer Berührung auf einer ringförmigen Linie oder einem sehr kurzen zylindrischen Bereich kommen kann. Unter der Länge des Fortsatzes wird dabei die Ausdehnung des Fortsatzes in Richtung seiner Rotationsachse und somit in Richtung der Achse des Spinnrotors bzw. der Rotortasse und des Rotorschafts verstanden. Durch den Wulst kann dem begegnet werden, da dieser auch bei geringeren Kräften leichter elastisch verformbar ist und dadurch einen definierten Berührungsbereich schafft.

Vorzugsweise ist die Erhebung in einem der Rotortasse bzw. einem Rotorboden der Rotortasse zugewandten Bereich des Fortsatzes angeordnet, d.h. bezogen auf eine Länge des Fortsatzes ist die Erhebung näher an dem an die eigentliche Rotortasse bzw. den Rotorboden anschließenden Beginn des Fortsatzes angeordnet als an dem Ende des Fortsatzes. Der Berührungsbereich, der durch die Erhebung definiert wird, befindet sich dadurch in vorteilhafter Weise nahe der eigentlichen Rotortasse bzw. dem Rotorboden. Somit ist der aus der Aufnahme herausragende, ungestützte Teil der Rotortasse kürzer, was einen besseren Halt der Rotortasse in dem Rotorschaft bewirkt.

Von Vorteil ist es bei einer Rotortasse mit einem kegelstupfförmigen Fortsatz oder einer kegelstumpfförmigen Aufnahme weiterhin, wenn das Zentriermittel und das Verbindungsmittel zumindest teilweise einteilig miteinander ausgebildet sind. Die einteilige Ausbildung des oder der Zentriermittel und des oder der Verbindungsmittel ermöglicht eine sehr präzise und zugleich kostengünstige Herstellung der Rotortasse. Dabei sind die zur Verbindung notwendigen Mittel wie beispielsweise Nuten oder Verzahnungen direkt an dem Zentriermittel, also an dem kegelstupfförmigen Fortsatz oder der kegelstumpfförmigen Aufnahme, ausgebildet. Es müssen daher keine unterschiedlichen Abschnitte an dem Fortsatz oder der Aufnahme vorgesehen werden, sondern beide Funktionen können auch in einem einzigen Abschnitt realisiert werden.

Nach einer alternativen Ausführung der Rotortasse beinhaltet das Zentriermittel wenigstens ein separat von dem Verbindungsmittel ausgebildetes Zentrierelement. Das Zentrierelement umfasst einen in der Rotortasse festgelegten Zylinderstift oder eine in der Rotortasse angeordnete Zentrierbohrung zur Aufnahme eines Zylinderstifts des Rotorschafts. Dabei umfassen die Verbindungsmittel einen vorzugsweise zylindrischen Fortsatz an der Rotortasse. Der Fortsatz korrespondiert mit einer Aufnahme des dafür vorgesehenen Rotorschafts. Die Zentrierung der Rotortasse und deren drehmomentübertragende und/oder axial sichernde Verbindung mit dem dafür vorgesehenen Rotorschaft erfolgt hierbei durch verschiedene Bauteile, nämlich den separaten Zylinderstift sowie den an der Rotortasse ausgebildeten Fortsatz. Die zur axial sichernden und/oder drehmomentübertragenden Verbindung notwendigen Vorkehrungen oder Mittel wie beispielsweise Nuten, Verzahnungen oder dergleichen sind dabei von dem Zentriermittel getrennt an einem separaten Bauteil angeordnet. Die Zentrierung erfolgt direkt mittels des Zylinderstifts. Hierdurch wird ebenso eine sehr präzise Verbindung der Rotortasse mit dem dafür vorgesehenen Rotorschaft gewährleistet und zudem eine kostengünstige Herstellung geschaffen, da die Zylinderstifte als Normteile bezogen werden können. Da das Verbindungsmittel vollständig separat von dem Zentriermittel ausgebildet ist, kann dieses die Zentrierung von Rotorschaft und Rotortasse nicht negativ beeinflussen. Zugleich ist die Herstellung des Verbindungsmittels an der Rotortasse und an dem Rotorschaft erleichtert, da des unabhängig von dem Zentriermittel an beliebiger Stelle und in beliebiger Weise ausgeführt werden kann.

Vorteilhafterweise ist der Fortsatz einteilig an die Rotortasse angeformt. Die Herstellung der Rotortasse ist hierdurch in wenigen Schritten realisierbar. Weiterhin hält das Verbindungsmittel hierdurch sehr hohen Kräften stand. Diese Ausführung ist daher sowohl für einen kegelstumpfförmigen Fortsatz als auch für einen zylindrisch oder in anderer Weise ausgebildeten Fortsatz vorteilhaft.

Es ist weiterhin von Vorteil, wenn der Zylinderstift in der Rotortasse festgelegt, insbesondere eingepresst, ist. Zum Luftdruckausgleich beim Einführen des Zylinderstifts der Rotortasse in die Zylinderbohrung des dafür vorgesehenen Rotorschafts, ist es ergänzend von Vorteil, wenn der Zylinderstift eine Druckausgleichsbohrung aufweist. Die Druckausgleichsbohrung erstreckt sich vorzugsweise durch die gesamte Länge des Zylinderstifts. Ist der Zylinderstift in die Rotortasse eingepresst, so weist vorzugsweise die Rotortasse eine an die Druckausgleichsbohrung des Zylinderstifts angrenzende Bohrung auf. Beim Zusammenführen der Rotortasse und des Rotorschafts wird der Druck ausgeglichen, indem die Luft durch die Druckausgleichsbohrung austritt.

Es stellt einen Vorteil dar, wenn die Aufnahme der Rotortasse eine erste Umfangsnut der Rotortasse oder der Fortsatz der Rotortasse eine zweite Umfangsnut aufweist. In diese kann dann ein Sicherungselement zur axialen Sicherung der Rotortasse an dem dafür vorgesehenen Rotorschaft eingesetzt werden. Entsprechend ist es auch vorteilhaft, wenn ein Sicherungselement zur axialen Sicherung der Rotortasse an dem dafür vorgesehenen Rotorschaft als Verbindungsmittel in die erste Umfangsnut der Aufnahme oder in die zweite Umfangsnut des Fortsatzes eingesetzt ist. Alternativ kann die Umfangsnut mit einem an dem Rotorschaft angeordneten Sicherungselement zusammenwirken.

Das Sicherungselement ist vorzugsweise ein O-Ring oder ein Sprengring. Das Sicherungselement ist vorzugsweise aus einem elastomeren Material. Ebenso sind Vulkanisate von Naturkautschuk und synthetischer Kautschuk als Materialien für das Sicherungselement denkbar. Alternativ ist jedoch auch eine axiale Sicherung der Rotortasse durch einen Magneten wie im Stand der Technik realisierbar. Sind die Rotortasse und der Rotorschaft miteinander verbunden, wird der O-Ring in die jeweiligen Umfangsnuten der Rotortasse und des Rotorschafts gedrückt, wodurch zumindest eine axiale Sicherung möglich ist.

Von Vorteil ist es, wenn das Sicherungselement ein Sprengring aus Federstahl ist. Der Sprengring ist aus einem Federstahldraht ausgebildet, welcher zu einem Ring gebogen ist. Die Enden des Federstahldrahts sind üblicherweise zumindest leicht voneinander beabstandet, so dass der Umfang der Sprengrings nicht vollständig geschlossen ist. Der Sprengring ist vorzugsweise an der Rotortasse angeordnet, so dass die Rotortasse, wenn diese angetrieben wird, in die Aufnahme gezogen wird. Die Aufnahme umfasst eine schräge Nutflanke, in welche der Sprengring bei angetriebener Rotortasse gezogen wird. Zum Einsatz des Springrings weist entweder die Rotortasse oder der Rotorschaft eine Umfangsnut zur Aufnahme des Sprengrings auf. Das jeweils andere Bauteil weist vorzugsweise ebenfalls eine Umfangsnut mit einer schrägen Nutflanke auf. Durch den Sprengring ist es möglich, hohe axiale Kräfte zu realisieren. Weiterhin ist das axiale Halt äußerst stark. Der Sprengring überträgt die wirkenden Axialkräfte auf die schräge Nutflanke.

Alternativ ist es vorteilhaft, wenn das Sicherungselement ein O-Ring aus einem elastomeren Material ist. Der O-Ring wird vorzugsweise verwendet, wenn zwischen der Rotortasse und dem Rotorschaft ein Spiel ausgebildet ist, welches von dem O-Ring ausgeglichen wird. Die beiden Umfangsnuten sind axial leicht zueinander versetzt, wenn die Rotortasse und der Rotorschaft miteinander verbunden sind. Hierdurch zieht der an der Rotortasse angeordnete O-Ring die Rotortasse axial in die Aufnahme der Rotorwelle hinein.

Die erste Umfangsnut der Aufnahme weist vorteilhafterweise eine schräge Nutflanke auf. Das sich in der Nut befindliche Sicherungselement, welches insbesondere als Sprengring oder O-Ring ausgebildet ist, weitet sich im Betrieb aufgrund der hohen Drehzahl des Spinnrotors und drückt gegen die schräge Nutflanke. Insbesondere bei einer Kupplungsvorrichtung mit einem kegelförmigen Fortsatz werden hierdurch der Rotorschaft und die Rotortasse noch weiter aneinander gezogen, so dass hierdurch die axiale Sicherung zwischen der Rotortasse und dem dafür vorgesehenen Rotorschaft noch verbessert wird.

Das Sicherungselement dient vorteilhafterweise zugleich der Drehmomentübertragung von dem dafür vorgesehenen Rotorschaft auf die Rotortasse. Mittels des Sicherungselements wird zwischen dem Rotorschaft und der Rotortasse eine kraftschlüssige Verbindung zur Verdrehsicherung ausgebildet. Der Fertigungsaufwand kann hierdurch reduziert werden, da ein Bauteil mehrere Funktionen übernimmt.

Alternativ oder zusätzlich zu der oben beschriebenen, kraftschlüssigen Verbindung zur Verdrehsicherung ist es von Vorteil, wenn der Fortsatz oder die Aufnahme wenigstens ein Formschlusselement aufweisen und eine formschlüssige Verbindung zur Drehmomentübertragung von dem dafür vorgesehenen Rotorschaft auf die Rotortasse bilden. Das Formschlusselement ist beispielsweise eine Klauenkupplung, kann jedoch auch jegliche andere, zur Drehmomentübertragung geeignete Form aufweisen. Die Drehmomentübertragung zwischen dem Rotorschaft und der Rotortasse ist hierdurch sehr zuverlässig.

Es stellt einen Vorteil dar, wenn das wenigstens eine Formschlusselement des Fortsatzes an dem zylindrischen Ansatz oder das wenigstens eine Formschlusselement der Aufnahme in der Vertiefung angeordnet ist.

Vorgeschlagen wird zudem ein Offenend-Spinnrotor mit einer Rotortasse, in welcher ein Fasermaterial verspinnbar ist, und einem Rotorschaft. Über den Rotorschaft ist der Spinnrotor in einer Lagerung, insbesondere in einer Magnetlagerung, abstützbar. Der Rotorschaft und die Rotortasse sind über eine Kupplungsvorrichtung lösbar miteinander verbunden. Die Kupplungsvorrichtung umfasst Verbindungsmittel zur Drehmomentübertragung zwischen der Rotortasse und dem Rotorschaft und zur axialen Sicherung der Rotortasse an dem Rotorschaft. Ferner umfasst die Kupplungsvorrichtung Zentriermittel zur Zentrierung von Rotortasse und Rotorschaft.

Nach einer ersten Ausführung umfassen die Zentriermittel einen kegelstumpfförmigen Fortsatz an einem der beiden Bauteile Rotortasse oder Rotorschaft sowie eine kegelstumpfförmige Aufnahme in dem jeweils anderen Bauteil, in welche der Fortsatz lösbar einsetzbar ist. Der Fortsatz ist vorzugsweise einteilig mit dem Bauteil ausgebildet, welches den Fortsatz umfasst. Wie bereits zuvor bei der Rotortasse beschrieben, beträgt der Kegelwinkel vorzugsweise 10° bis 30° und ist derart gewählt, dass er nicht selbsthemmend ist. Hierdurch kann eine besonders gute Zentrierung zwischen der Rotortasse und dem Rotorschaft erreicht werden und es wird zugleich eine kostengünstige Herstellung des Spinnrotors ermöglicht. Vorzugsweise ist dabei der Fortsatz an der Rotortasse ausgebildet und die Aufnahme an dem Rotorschaft, eine umgekehrte Anordnung ist jedoch ebenfalls denkbar.

Dabei ist es von Vorteil, wenn der Fortsatz einen Ansatz und die Aufnahme eine Vertiefung aufweist, welche vorzugsweise rotationssymmetrisch, insbesondere zylindrisch, ausgebildet sind. Wie bereits beschrieben kann der Ansatz sowohl der verbesserten Führung der Rotortasse an dem Rotorschaft als auch der Realisierung weiterer Funktionen der Kupplungsvorrichtung, beispielsweise der Drehmomentübertragung, unabhängig von der Kegelverbindung dienen.

Von Vorteil ist es weiterhin, wenn die Zentriermittel und die Verbindungsmittel zumindest teilweise einteilig miteinander ausgebildet sind. Dabei sind die zur Verbindung notwendigen Mittel wie beispielsweise Nuten, Verzahnungen oder dgl. vorzugsweise direkt an dem bzw. den Zentriermitteln, insbesondere an dem kegelstumpfförmigen Fortsatz und/oder der kegelstumpfförmigen Aufnahme, ausgebildet.

Alternativ beinhalten die Zentriermittel wenigstens ein separat von den Verbindungsmitteln ausgebildetes Zentrierelement. Das Zentrierelement umfasst einen Zylinderstift, welcher in einem der beiden Bauteile Rotortasse oder Rotorschaft festgelegt, insbesondere eingepresst, ist. Der Zylinderstift ist in eine Zentrierbohrung des jeweils anderen Bauteils lösbar einsetzbar, welche ein Zentriermittel an dem jeweils anderen Bauteil bildet. Weiterhin umfassen die Verbindungsmittel einen vorzugsweise zylindrischen Fortsatz an der Rotortasse und eine vorzugsweise zylindrische Aufnahme an dem Rotorschaft, in welche der Fortsatz der Rotortasse einbringbar ist. Die Zentriermittel und die Verbindungsmittel werden somit durch verschiedene Bauteile bereitgestellt, wobei die Zentrierung durch das Zusammenwirken des Zylinderstifts und der Zentrierbohrung erfolgt, während die Verbindung, also die axiale Sicherung und/oder die Drehmomentübertragung, zwischen Rotortasse und Rotorschaft, durch den Fortsatz der Rotortasse sowie die Aufnahme des Rotorschafts erfolgt. Etwaige Vorkehrungen für weitere Verbindungsmittel wie Nuten, Verzahnungen oder dergleichen sind nicht an dem Zentriermitteln sondern an dem Fortsatz vorgenommen, so dass die Funktionen Zentrieren und Verbinden an separaten Bauteilen vorgesehen sind. Durch den Zylinderstift vereinfacht sich die Herstellung des Offenend-Spinnrotors. Weiterhin werden Passprobleme reduziert.

Vorteilhaft ist es auch hierbei, wenn der Fortsatz und/oder die Aufnahme einteilig mit dem Rotorschaft bzw. der Rotortasse verbunden sind. Grundsätzlich wäre es jedoch auch möglich, den Fortsatz und/oder die Aufnahme als separate Bauteile vorzusehen und diese dann mit dem Rotorschaft oder der Rotortasse zu verbinden.

Vorteilhafterweise ist der Zylinderstift in dem Rotorschaft festgelegt, insbesondere eingepresst. Der Zylinderstift ist hierdurch vor Beschädigungen geschützt angeordnet.

Vorteilhaft ist es, wenn die Zentriermittel und die Verbindungsmittel zumindest teilweise einteilig miteinander ausgebildet sind. Dies ermöglicht eine sehr kostengünstige Herstellung des Spinnrotors, da die beiden Funktionen Zentrieren und Verbinden an einem einzigen Bauteil und auch in einem einzigen Abschnitt desselben Bauteils realisiert werden können.

Der Offenend-Spinnrotor weist vorteilhafterweise eine Rotortasse gemäß der vorhergehenden Beschreibung auf.

Weitere Vorteile der Erfindung sind in den nachfolgenden Ausführungsbeispielen beschrieben. Es zeigen:
- **Figur 1**: eine erste Ausführung einer erfindungsgemäßen Rotortasse und eines zugehörigen Rotorschafts,
- **Figur 2**: einen Offenend-Spinnrotor mit einer Rotortasse gemäß der ersten Ausführung,
- **Figur 3**: ein zweites Ausführungsbeispiel der Rotortasse und des dafür vorgesehenen Rotorschafts,
- **Figur 4**: eine dritte Ausführung der Rotortasse und des zugehörigen Rotorschafts,
- **Figur 5**: den Offenend-Spinnrotor mit der Rotortasse und dem Rotorschaft gemäß einer vierten Ausführung,
- **Figur 6**: ein fünftes Ausführungsbeispiel der Rotortasse und des zugehörigen Rotorschafts,
- **Figur 7**: den Offenend-Spinnrotor mit der Rotortasse und dem Rotorschaft gemäß dem fünften Ausführungsbeispiel im Schnitt,
- **Figur 8**: ein sechstes Ausführungsbeispiel der Rotortasse und des zugehörigen Rotorschafts,
- **Figur 9**: ein siebtes Ausführungsbeispiel der Rotortasse und des zugehörigen Rotorschafs,
- **Figur 10**: ein achtes Ausführungsbeispiel der Rotortasse und des zugehörigen Rotorschafts,
- **Figur 11**: ein neuntes Ausführungsbeispiel der Rotortasse und des zugehörigen Rotorschafts
- **Figur 12**: ein zehntes Ausführungsbeispiel der Rotortasse und des zugehörigen Rotorschafts,
- **Figur 13**: die Rotortasse mit einer Klauenkupplung gemäß dem fünften Ausführungsbeispiel, sowie
- **Figur 14**: ein weiteres Ausführungsbeispiel der Rotortasse und des dafür vorgesehenen Rotorschafts.

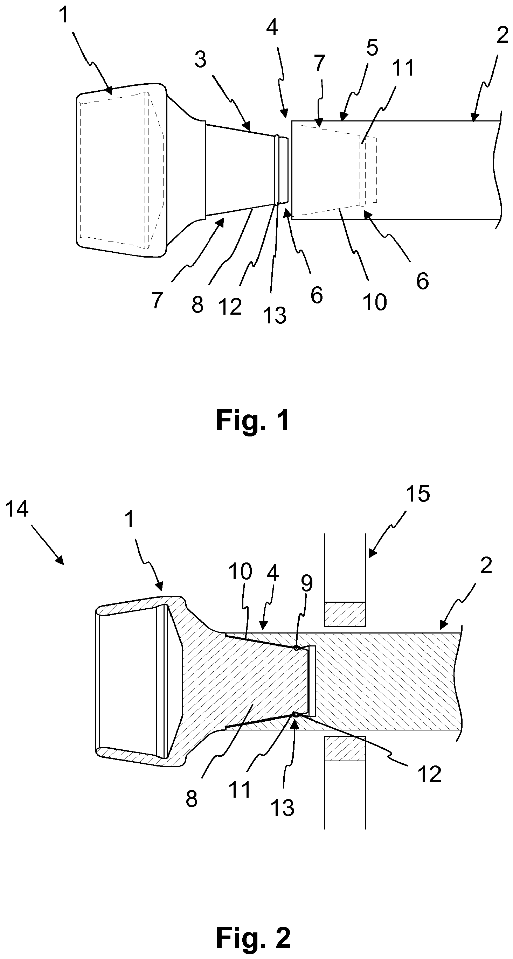

Die Figur 1 zeigt eine erfindungsgemäße Rotortasse 1 und einen zur Verbindung mit der Rotortasse 1 vorgesehenen Rotorschaft 2, welcher in allen Figuren abgebrochen dargestellt ist. Die Rotortasse 1 weist einen ersten Teil 3 einer Kupplungsvorrichtung 4 zur lösbaren Verbindung der Rotortasse 1 mit dem Rotorschaft 2 auf. Der Rotorschaft 2 weist einen zweiten Teil 5 der Kupplungsvorrichtung 4 zur Verbindung mit der Rotortasse 1 auf. Die beiden Teile 3, 5 der Kupplungsvorrichtung 4 umfassen Verbindungsmittel 6 zur Drehmomentübertragung von dem Rotorschaft 2 auf die Rotortasse 1 und zur axialen Sicherung der Rotortasse 1 an dem Rotorschaft 2. Weiterhin umfassen die beiden Teile 3, 5 der Kupplungsvorrichtung 4 Zentriermittel 7 zur Zentrierung der Rotortasse 1 an dem Rotorschaft 2.

Der erste Teil 3 der Kupplungsvorrichtung 4 der Rotortasse 1 beinhaltet vorliegend einen kegelstumpfförmigen Fortsatz 8 und ein Sicherungselement 13, vorliegend einen O-Ring als Verbindungsmittel 6 an der Rotortasse 1. Der zweite Teil 5 der Kupplungsvorrichtung 4 des Rotorschafts 2 umfasst eine kegelstumpfförmige Aufnahme 10 sowie eine erste Umfangsnut 11 als Verbindungsmittel 6 an dem Rotorschaft 2. Der O-Ring ist vorliegend in einer zweiten Umfangsnut 12 des Fortsatzes 8 angeordnet, könnte jedoch ebenso in der ersten Umfangsnut 11 der Aufnahme 10 angeordnet sein. Die beiden Umfangsnuten 11, 12 sind derart zueinander versetzt, dass die Rotortasse 1 axial in die konische Aufnahme 10 des Rotorschafts 2 gezogen wird, wenn die Rotortasse 1 und der Rotorschaft 2 miteinander verbunden sind. Weiterhin wäre es auch denkbar, dass nur eines der beiden Teile Aufnahme 10 oder Fortsatz 8 eine Umfangsnut 11, 12 aufweist. Der Fortsatz 8 sowie die korrespondierende Aufnahme 10 des Rotorschafts 2 sind zugleich als Zentriermittel 7 derart ausgebildet, dass die Rotortasse 1 in dem Rotorschaft 2 zentriert werden kann.

Vorliegend dient, wie zuvor beschrieben, der Fortsatz 8 jedoch zumindest teilweise auch als Verbindungsmittel 6. Selbiges gilt für die Aufnahme 10, welche im Folgenden anhand der Figur 2 beschrieben wird. Vorliegend sind somit die Verbindungsmittel 6 zumindest teilweise einteilig mit den Zentriermitteln 7 ausgebildet. Der O-Ring bildet ein Verbindungsmittel 6 zur Verbindung der Rotortasse 1 mit dem Rotorschaft 2 aus. Nach der vorliegenden Darstellung bildet der O-Ring ein Sicherungselement 13 zur axialen Sicherung der Rotortasse 1 an dem Rotorschaft 2 aus. Auch die Drehmomentübertragung von dem Rotorschaft 2 auf die Rotortasse 1 erfolgt über den O-Ring, wenn die Rotortasse 1 in dem Rotorschaft 2 angeordnet ist (vgl. Fig. 2). Das Sicherungselement 13, hier in Form des O-Rings, dient somit zugleich als Verbindungsmittel 6 zur axialen Sicherung und zur Drehmomentübertragung von dem Rotorschaft 2 auf die Rotortasse 1. Anstelle eines O-Rings könnte das Sicherungselement 13 auch als Sprengring ausgebildet sein.

Der Fortsatz 8 und die mit dem Fortsatz 8 korrespondierende Aufnahme 10 weisen jeweils einen Neigungswinkel von 10° bis 30° auf. Der Fortsatz 8 ist vorliegend einteilig mit der Rotortasse 1 ausgebildet, könnte jedoch auch ein mit dieser verbundenes, separates Bauteil sein.

Die Figur 2 zeigt einen Offenend-Spinnrotor 14 in einer Schnittdarstellung. Der Offenend-Spinnrotor 14 ist drehbar in einer Lagerung 15 gelagert und wird vorzugsweise durch einen nicht dargestellten Elektromotor angetrieben. Die Lagerung 15 kann als Magnetlagerung oder auch als herkömmliche Lagerung mit Stützscheiben ausgebildet sein. Der Offenend-Spinnrotor 14 umfasst die Rotortasse 1 und den Rotorschaft 2 gemäß der Figur 1. Die Rotortasse 1 ist mit dem Rotorschaft 2 verbunden, wobei der Fortsatz 8 der Rotortasse 1 in der Aufnahme 10 des Rotorschafts 2 angeordnet ist. Das Sicherungselement 13, hier der O-Ring 9, ist zunächst nur in der zweiten Umfangsnut 12 des Fortsatzes 8 angeordnet und wird bei der Montage der Rotortasse 1 an den Rotorschaft 2 in eine erste Umfangsnut 11 der Aufnahme 10 gedrückt. Die Rotortasse 1 wird dadurch axial in die Aufnahme 10 des Rotorschafts 2 gezogen und somit an dem Rotorschaft 2 axial gesichert. Durch den O-Ring 9 entsteht zwischen dem Rotorschaft 2 und der Rotortasse 1 eine kraftschlüssige Verbindung, welche im Betrieb des Spinnrotors 14 das Drehmoment von dem Rotorschaft 2 auf die Rotortasse 1 überträgt. Ebenso wäre dies möglich, wenn das Sicherungselement 13 als Sprengring ausgebildet wäre.

Bei der nachfolgenden Beschreibung der weiteren Figuren werden für Merkmale, die bereits im Zusammenhang mit Figur 1 und 2 bzw. mit einer anderen Figur beschrieben wurden und die in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der in Verbindung mit anderen Figuren bereits beschriebenen Merkmale. Auch sind aus Gründen der Übersichtlichkeit nicht in allen Figuren alle Merkmale mit Bezugszeichen versehen.

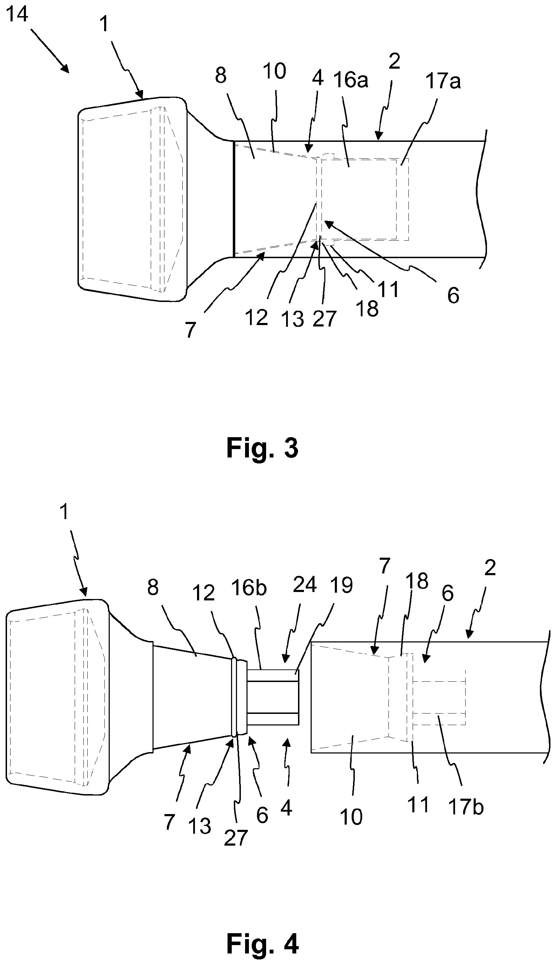

Die Figur 3 zeigt den Offenend-Spinnrotor 14 mit einer alternativen Ausführung der Rotortasse 1 und dem dafür vorgesehenen Rotorschaft 2. Die Rotortasse 1 ist wieder einteilig mit dem Fortsatz 8 ausgebildet und entspricht im Wesentlichen der der Figuren 1 und 2, wobei jedoch im Unterschied zur Figur 1 und 2 an dem Fortsatz 8 ein zylindrischer Ansatz 16a angeordnet ist. Der zylindrische Ansatz 16a verlängert im Wesentlichen den Fortsatz 8. Der Rotorschaft 2 weist eine mit dem Ansatz 16a korrespondierende zylindrische Vertiefung 17a auf. Der Fortsatz 8 und die Aufnahme 10 sind kegelstumpfförmig ausgebildet. Der Ansatz 16a und die Vertiefung 17a sind zylindrisch und dienen der besseren Führung der Rotortasse 1 an dem Rotorschaft 2, die Zentrierung erfolgt jedoch über den Kegelsitz zwischen der Aufnahme 10 und dem Fortsatz 8. Die Aufnahme 10 und die Vertiefung 17a sind im Wesentlichen über eine erste Umfangsnut 11 mit einer schrägen Nutflanke 18 miteinander verbunden. Als Sicherungselement 13 ist vorliegend ein Sprengring 27 vorgesehen, der in der zweiten Umfangsnut 12 des Fortsatzes 8 angeordnet ist. Der Sprengring 27 wirkt bei einer Rotation der Rotortasse 1 mit der schrägen Nutflanke 18 zusammen, so dass die Rotortasse in den Rotorschaft gezogen wird. Wie zuvor zu Figur 1 und 2 beschrieben, sorgt der durch das Sicherungselement 13 wirkende Kraftschluss für eine Verdrehsicherung zwischen dem Rotorschaft 2 und der Rotortasse 1. Dreht sich der Rotorschaft 2, so dreht sich folglich die Rotortasse 1 gemeinsam mit dem Rotorschaft 2.

Die schräge Nutflanke 18 ist dabei nun derart angeordnet, dass das Sicherungselement 13, hier der Sprengring 27, sich weitet und gegen die Nutflanke 18 drückt, wenn die Rotortasse 1 mit dem Rotorschaft 2 verbunden ist und im Betrieb mit hoher Drehzahl umläuft. Die Rotortasse 1 wird hierdurch axial an den Rotorschaft 2 herangezogen bzw. insbesondere in die Vertiefung 17a hineingezogen, so dass eine besonders gute Verbindung zwischen dem Rotorschaft 2 und der Rotortasse 1 erzielt wird. Eine derartige Umfangsnut 11 mit einer schrägen Nutflanke 18 kann dabei sowohl bei einem Sicherungselement 13 zum Einsatz kommen, das nur der axialen Sicherung dient, als auch bei einem Sicherungselement 13, das der axialen Sicherung und der Drehmomentübertragung dient.

Die Figur 4 zeigt eine dritte Ausführung der Rotortasse 1 und des dafür vorgesehenen Rotorschafts 2. Die Rotortasse 1 und der Rotorschaft 2 sind separat dargestellt und können wie zu der Figur 3 beschrieben zu einem Offenend-Spinnrotor 14 verbunden werden. In der zweiten Umfangsnut 12 des Fortsatzes 8 ist als Sicherungselement 13 bzw. als Verbindungsmittel 6 zur axialen Verbindung vorliegend wieder ein Sprengring 27 angeordnet. Der Fortsatz 8 umfasst einen kantigen Ansatz 16b, welcher derart ausgebildet ist, dass eine drehmomentübertragende Fläche 19 bereitgestellt ist. Der Ansatz 16b bildet somit vorliegend ein Formschlusselement 24 des Fortsatzes 8 aus. Korrespondierend zum kantigen Ansatz 16b der Rotortasse 1 ist eine kantige Vertiefung 17b des Rotorschafts 2 ausgebildet, welche ebenfalls ein Formschlusselement 24 darstellt. Der Ansatz 16b sowie die Vertiefung 17b bilden somit Verbindungsmittel 6 zur Drehmomentübertragung aus. In der Aufnahme 10 des Rotorschafts 2 ist vorliegend wieder eine erste Umfangsnut 11 zum Zusammenwirken mit dem Sicherungselement 13 des Fortsatzes 8 ausgebildet, welche eine schräge Nutflanke 18 aufweisen kann oder als einfache Nut mit geraden Flanken ausgebildet sein kann. Als Zentriermittel sind wiederum die kegelstumpfförmige Aufnahme 10 sowie der kegelstumpfförmige Fortsatz 8 vorgesehen.

Abweichend von den in den Figuren 1 bis 4 gezeigten Darstellungen wäre es weiterhin natürlich auch möglich, den Fortsatz 8 an dem Rotorschaft 2 und die Aufnahme 10 an der Rotortasse 2 vorzusehen. Weiterhin kann auch die Nut 11 der Aufnahme 10 mit oder ohne einer schrägen Nutflanke 18 ausgebildet sein.

Im Folgenden wird auf Basis der Figuren 3 und 4 ein weiteres, nicht dargestellten Ausführungsbeispiel beschrieben. Dabei ist an dem Rotorschaft 2 ein kegelstumpfförmiger Fortsatz 8 gemäß der vorangegangenen Beschreibung ausgebildet und die Rotortasse 1 weist die kegelstumpfförmige Aufnahme 10 auf. An dem kegelstumpfförmigen Fortsatz 8 des Rotorschafts 2 ist in der zweiten Umfangsnut 12 des Fortsatzes 8 das Sicherungselement 13, insbesondere ein O-Ring 9 oder Sprengring 27, vorgesehen. Ebenso wie zuvor beschrieben wird bei der Verbindung des Rotorschafts 2 mit der Rotortasse 1 dann der Sprengring 27 gegen eine schräge Nutflanke 18 der Aufnahme 10 der Rotortasse 1 gedrückt, wodurch eine axiale Sicherung der Rotortasse 1 an dem Rotorschaft erreicht wird. Die schräge Nutflanke 18 kann dabei mit einer Umfangsnut 11 ausgebildet sein.

Abweichend zur Darstellung der Figuren 3 und 4 weist jedoch der kegelstumpfförmige Fortsatz 8 keinen zylindrischen Ansatz 16a oder kantigen Ansatz 16b auf, sondern einen ebenfalls kegelförmigen Ansatz oder Fortsatz, der mit einer Rändelung oder Verzahnung als Formschlusselement 24 versehen ist. In dem Rotorschaft 2 ist in Verlängerung der Aufnahme 10 eine dazu korrespondierende Vertiefung 17 vorgesehen, die ebenfalls kegelförmig ist und die ebenfalls eine Rändelung oder Verzahnung aufweist. Die Aufnahme 10 mit der Vertiefung 17 kann dabei auch durch ein gesondertes Bauteil in Form eines Einsatzes bereitgestellt werden, der in eine Bohrung des Rotorschafts 2 einsetzbar ist. Um die Zentrierung im Bereich des Fortsatzes 8 und der Aufnahme 10 nicht zu beeinträchtigen, können die Formschlusselemente 24 in radialer Richtung mit einem Spiel versehen sein.

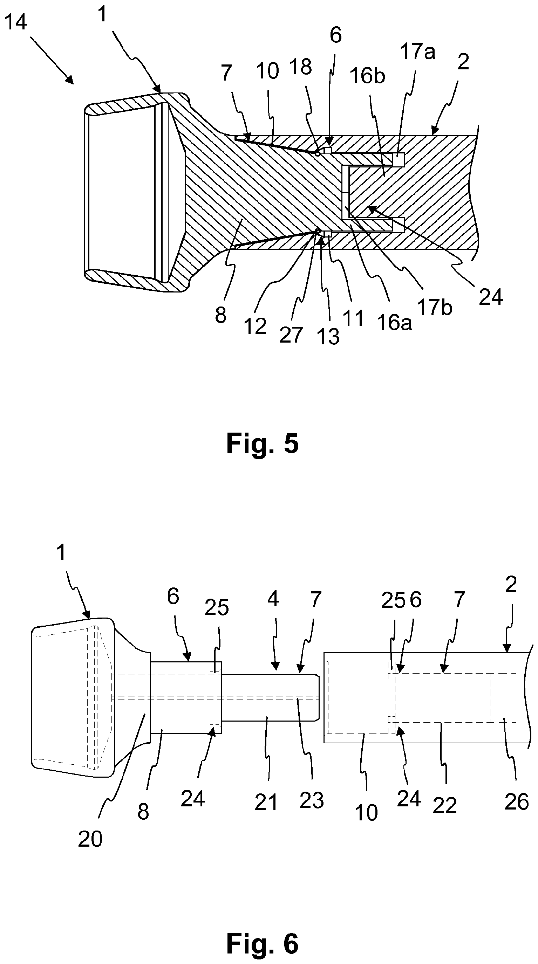

Die Figur 5 zeigt ein viertes Ausführungsbeispiel der Rotortasse 1 und des Rotorschafts 2, wobei diese zu dem Offenend-Spinnrotor 14 verbunden sind. Die Rotortasse 1 weist den Fortsatz 8 sowie als Sicherungselement 13 den in der zweiten Umfangsnut 12 angeordneten Sprengring 27 auf. An dem Fortsatz 8 ist ein zylindrischer Ansatz 16a ausgebildet, in welchem nunmehr die kantige Vertiefung 17b ausgebildet ist. Der Rotorschaft 2 weist die Aufnahme 10 sowie eine zylindrische Vertiefung 17a auf, in welcher ein zu der kantigen Vertiefung 17a korrespondierender kantiger Ansatz 16b ausgebildet ist. Der kantige Ansatz 16b und die kantige Vertiefung 17b beinhalten somit jeweils ein Formschlusselement 24 und bilden wieder Verbindungsmittel 6 zur Drehmomentübertragung aus.

Der Sprengring 27 und die Nutflanke 18 stellen hingegen wieder Verbindungsmittel 6 zur axialen Sicherung der Rotortasse 1 an dem Rotorschaft 2 dar. Zusätzlich kann auch zumindest teilweise eine kraftschlüssige Drehmomentübertragung zwischen der Rotortasse 1 und dem Rotorschaft 2 durch den Sprengring 27 und die Nutflanke 18 erfolgen.

Die Zentrierung der Rotortasse 1 und des Rotorschafts 2 erfolgt durch das Zusammenwirken des kegelstumpfförmigen Fortsatzes 8 und der kegelstumpfförmigen Aufnahme 10, an welchen, wie zuvor beschrieben, zugleich zumindest ein Teil der Verbindungsmittel 6 angeordnet ist bzw. zugleich einen Teil der Verbindungsmittel 6 darstellen. Folglich sind die Zentriermittel 7 und die Verbindungsmittel 6 teilweise einteilig ausgebildet. Diese Gemeinsamkeit weisen die bisher beschriebenen Ausführungsbeispiele 1 bis 4 auf.

Die Figur 6 zeigt ein fünftes Ausführungsbeispiel der Rotortasse 1 sowie des dafür vorgesehenen Rotorschafts 2. Die Zentriermittel 7 umfassen dabei wenigstens ein separat von den Verbindungsmitteln 6 ausgebildetes Zentrierelement 20. Das Zentrierelement 20 umfasst einen Zylinderstift 21, welcher vorliegend in die Rotortasse 1, insbesondere den Fortsatz 8, eingepresst ist. Der Zylinderstift 21 erstreckt sich von der Rotortasse 1 bis über den Fortsatz 8 hinaus.

In dem Rotorschaft 2 ist als Zentriermittel 7 eine Zentrierbohrung 22 angeordnet, welche mit dem Zylinderstift 21 der Rotortasse 1 korrespondiert und ebenfalls ein Zentriermittel 7 ausbildet. Der Zylinderstift 21 weist eine Druckausgleichsbohrung 23 auf. Die Druckausgleichsbohrung 23 erstreckt sich von dem Zylinderstift 21 bis in die Rotortasse 1 hinein, so dass bei der Verbindung der Rotortasse 1 mit dem Rotorschaft 2 der Luftdruck ausgeglichen wird.

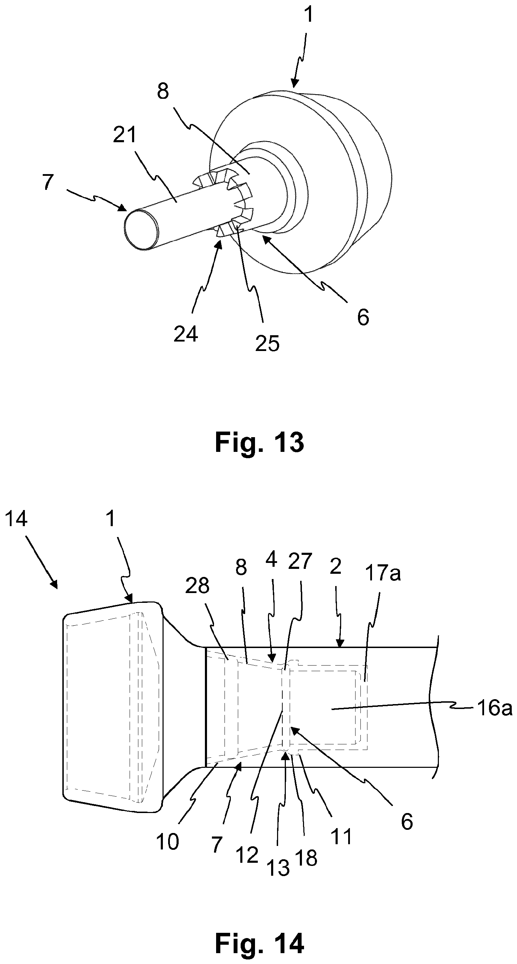

Die Kupplungsvorrichtung 4 umfasst weiterhin ein Formschlusselement 24 zur Drehmomentübertragung von dem dafür vorgesehenen Rotorschaft 2 auf die Rotortasse 1. Vorliegend ist als Formschlusselement 24 an der Rotortasse 1 und dazu korrespondierend auch an dem Rotorschaft 2 ein Teil einer Klauenkupplung 25 vorgesehen. Die Formschlusselemente 24 bilden somit ebenso wie die zuvor beschriebenen kantigen Vertiefungen 17b bzw. Ansätze 17a Verbindungsmittel 6 zur Drehmomentübertragung aus. Als Verbindungsmittel 6 zur axialen Sicherung ist vorliegend ein Magnet 26 in dem Rotorschaft 2 vorgesehen. Die Klauenkupplung 25 ist in der Figur 13 im Detail dargestellt.

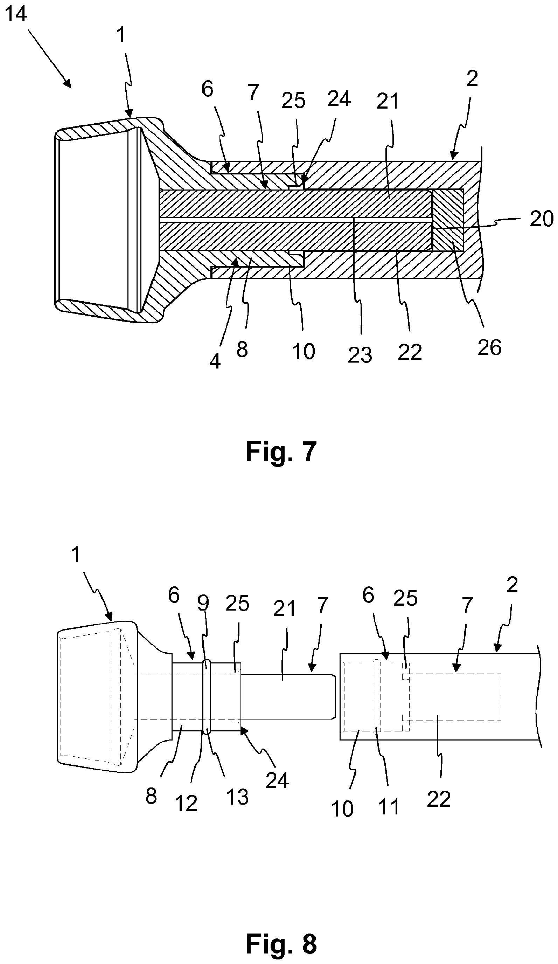

Die Figur 7 zeigt den Offenend-Spinnrotor 14 mit der Rotortasse 1 und dem Rotorschaft 2 gemäß der Figur 6, insbesondere gemäß dem fünften Ausführungsbeispiel. Die Rotortasse 1 ist über die Verbindungsmittel 6 mit dem Rotorschaft 2 verbunden. Die Verbindungsmittel 6 zur Drehmomentübertragung werden von den an dem Fortsatz 8 und der Aufnahme 10 angeordneten Formschlusselementen 24 ausgebildet. Dabei greift die Klauenkupplung 25 derart ineinander, dass eine Übertragung des Drehmoments von dem Rotorschaft 2 auf die Rotortasse 1 erfolgen kann. Die Rotortasse 1 und der Rotorschaft 2 werden durch einen in dem Rotorschaft 2 angeordneten Magnet 26 axial gesichert, welcher somit ein Verbindungsmittel 6 zur axialen Sicherung ausbildet. Die Zentrierung der Rotortasse 1 erfolgt mittels des Zylinderstifts 21 der Rotortasse 1, welcher in der Zentrierbohrung 22 des Rotorschafts 2 angeordnet ist.

Das Zentrierelement 20, insbesondere der Zylinderstift 21, ist somit vollständig separat von den Verbindungsmitteln 6, insbesondere von dem an dem Fortsatz 8 und der Aufnahme 10 angeordneten Formschlusselement 24 zur Drehmomentübertragung und dem Magnet 26 zur axialen Sicherung, ausgebildet.

Die Figur 8 zeigt die Rotortasse 1 sowie den dafür vorgesehenen Rotorschaft 2 gemäß einer sechsten Ausführung. Die Rotortasse 1 weist dabei den Fortsatz 8 mit einem Teil einer Klauenkupplung 25 auf, welche korrespondierend zu einem zweiten Teil der Klauenkupplung 25 der Aufnahme 10 des Rotorschafts 2 ausgebildet ist. Weiterhin weist der Fortsatz 8 die zweite Umfangsnut 12 auf. In der zweiten Umfangsnut 12 ist ein Sicherungselement 13, insbesondere der O-Ring 9, angeordnet. Die Aufnahme 10 des Rotorschafts 2 weist eine erste Umfangsnut 11 auf, in welche der O-Ring 9 gedrückt wird, wenn die Rotortasse 1 und der Rotorschaft 2 zur Ausbildung des Offenend-Spinnrotors 14 miteinander verbunden werden. Die axiale Sicherung der Rotortasse 1 an dem Rotorschaft 2 erfolgt hierbei durch den O-Ring 9 und die Nuten 11,12 als Verbindungsmittel 6 zur axialen Sicherung. Die zuverlässige Drehmomentübertragung wird durch die gekuppelten Formschlusselemente 24, insbesondere die Klauenkupplung 25, als Verbindungsmittel 6 sichergestellt. Die Zentrierung der Rotortasse 1 an dem Rotorschaft 2 erfolgt durch den Zylinderstift 21 und die Zentrierbohrung 22 als Zentriermittel 7, welche den Zylinderstift 21 aufnehmen soll.

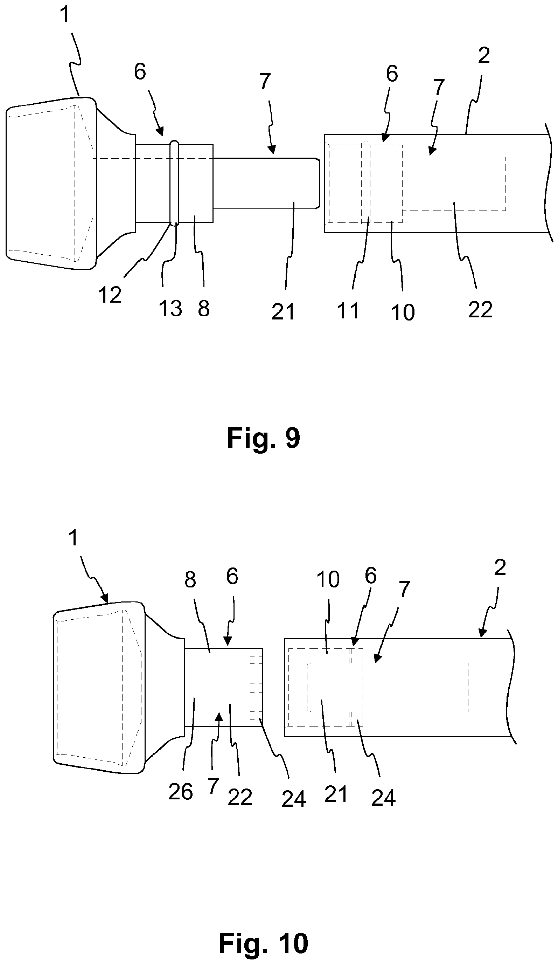

Die Figur 9 zeigt ein siebtes Ausführungsbeispiel der Rotortasse 1 sowie des Rotorschafts 2. Dabei weist die Rotortasse 1, entgegen der zuvor beschriebenen Ausführungen, kein Formschlusselement 24 auf. Die axiale Sicherung der Rotortasse 1 an dem Rotorschaft 2 erfolgt hierbei lediglich durch den O-Ring 9 oder ein sonstiges Sicherungselement 13 zur axialen Sicherung, welcher bzw., welches im verbundenen Zustand von der ersten und zweiten Umfangsnut 11, 12 aufgenommen wird. Damit erfolgen die axiale Sicherung sowie auch die Drehmomentübertragung mittels des Sicherungselements 13, insbesondere des O-Rings 9 oder des Sprengrings 27 (vgl. Fig. 3 und 4), als Verbindungsmittel 6. Die Zentrierung der Rotortasse 1 und des Rotorschafts 2 erfolgt weiterhin durch den Zylinderstift 21 und die dazu korrespondierende Zentrierbohrung 22 als Zentriermittel 7. Der Sprengring 27 wirkt gemeinsam mit der schrägen Nutflanke 18 gemäß der Figuren 3 und 4. Die Ausführungsformen, welche die erste Umfangsnut 11 und die zweite Umfangsnut 12 aufweisen, können jeweils dahingehend geändert werden, dass eine der Umfangsnuten 11, 12 durch die schräge Nutflanke 18 ersetzt oder ergänzt wird, damit das Zusammenwirken mit dem Sprengring 27 realisiert werden kann. Der Sprengring 27 wird dabei in der verbleibenden ersten oder zweiten Umfangsnut 11, 12 angeordnet.

Die Figur 10 zeigt ein achtes Ausführungsbeispiel der Rotortasse 1 und des Rotorschafts 2. Die Rotortasse 1 weist den Fortsatz 8 auf, in welchem die Zentrierbohrung 22 ausgebildet ist. Weiterhin weist der Fortsatz 8 das Formschlusselement 24 als Verbindungselement 6 zur Drehmomentübertragung auf. Weiterhin ist in der Rotortasse 1 ein Magnet 26 als Verbindungselement 6 zur axialen Verbindung angeordnet. Der Rotorschaft 2 umfasst die Aufnahme 10, wobei in der Aufnahme 10 der Zylinderstift 21 ausgebildet ist. In der Aufnahme 10 ist zudem das Formschlusselement 24 angeordnet.

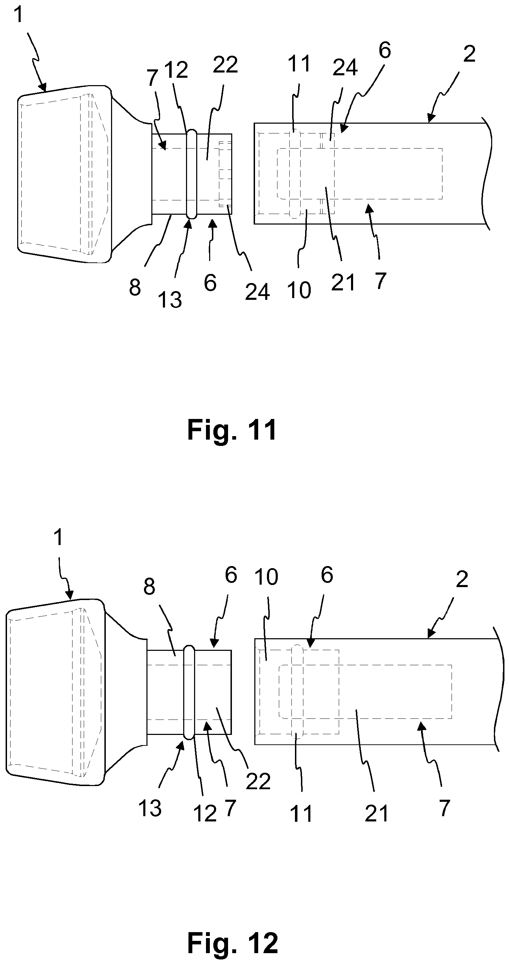

Die Figur 11 zeigt ein neuntes Ausführungsbeispiel der Rotortasse 1 und des Rotorschafts 2. Hierbei ist an dem Rotorschaft 2 und der Rotortasse 1 zusätzlich zum Formschlusselement 24 als Verbindungselement 6 zur Drehmomentübertragung ein Sicherungselement 13, insbesondere ein O-Ring 9 oder Sprengring 27, als Verbindungselement 6 zur axialen Verbindung angeordnet. Die Zentrierung erfolgt wiederum über separate Zentriermittel 7, nämlich den Zylinderstift 21 und die Zentrierbohrung 22.

Die Figur 12 zeigt ein zehntes Ausführungsbeispiel der Rotortasse 1 und des Rotorschafts 2. Hierbei erfolgt die axiale Sicherung der Rotortasse 1 an dem Rotorschaft 2 sowie die Drehmomentübertragung von dem Rotorschaft 2 auf die Rotortasse 1 allein über das Sicherungselement 13, insbesondere den O-Ring 9, als Verbindungsmittel 6. In dem Rotorschaft 2 ist der Zylinderstift 21 angeordnet, welcher zur Verbindung des Rotorschafts 2 mit dem Rotortasse 1 in die Zentrierbohrung 22 eingeführt wird. Die Zentrierung der Rotortasse 1 und des Rotorschafts erfolgt mittels des Zylinderstifts 21 und der Zentrierbohrung 22.

Die Figur 13 zeigt die Rotortasse 1, welche die Klauenkupplung 25 in Form einer Verzahnung trägt. Weiterhin weist die Rotortasse 1 den zylindrischen Fortsatz 8 sowie den darin eingepressten Zylinderstift 21 gemäß der Figur 6 auf. Die Klauenkupplung 25 ist als Formschlusselement 24 ausgebildet, mittels welchem die Rotortasse 1 drehfest mit dem Rotorschaft 2 gemäß der Figur 6 verbunden werden kann. Der Rotorschaft 2 weist dabei eine mit der Klauenkupplung 25 korrespondierende Verzahnung auf.

Figur 14 zeigt schließlich noch ein weiteres Ausführungsbeispiel der Rotortasse 1 und des dafür vorgesehenen Rotorschafts 2. Der Offenend-Spinnrotor 14 der Figur 14 entspricht dabei im Wesentlichen dem der Figur 3, so dass im Folgenden lediglich noch die Unterschiede zur Ausführung der Figur 3 beschrieben werden. Wie der Figur 14 entnehmbar, weist der kegelstumpfförmige Fortsatz 8 der Rotortasse 1 dabei nahe dem Beginn des Fortsatzes 8 eine umlaufende Erhebung 28 auf, die vorliegend als runder Wulst ausgeführt ist. Hierdurch kann ein definierter Berührungsbereich zwischen dem kegelstumpfförmigen Fortsatz 8 und der kegelstumpfförmigen Aufnahme 10 des Rotorschafts 2 geschaffen werden. Der Halt der Rotortasse 1 in dem Rotorschaft 2 kann hierdurch verbessert werden, auch wenn wie vorliegend durch das axiale Sicherungselement 13 nur eine geringe axiale Spannkraft aufgebracht werden kann. Das Sicherungselement 13 kann als Sprengring 27 oder auch als elastischer O-Ring ausgeführt sein, das wiederum durch die Umfangsnut 11 mit der schrägen Nutflanke 18 die Rotortasse axial in den Rotorschaft 2 zieht und zugleich eine Verdrehsicherung zwischen dem Rotorschaft 2 und der Rotortasse 1 ausbildet. Die Erhebung 28 kann natürlich anstelle eines runden Wulstes bzw. anstelle eines halbrunden Profils auch durch eine im Querschnitt rechteckige oder trapezförmige, umlaufende Erhebung 28 gebildet sein.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Rotortasse
- 2: Rotorschaft
- 3: Erster Teil einer Kupplungsvorrichtung
- 4: Kupplungsvorrichtung
- 5: Zweiter Teil der Kupplungsvorrichtung
- 6: Verbindungsmittel
- 7: Zentriermittel
- 8: Fortsatz
- 9: O-Ring
- 10: Aufnahme
- 11: Erste Umfangsnut
- 12: Zweite Umfangsnut
- 13: Sicherungselement
- 14: Offenend-Spinnrotor
- 15: Lagerung
- 16a: Zylindrischer Ansatz
- 16b: kantiger Ansatz
- 17a: zylindrische Vertiefung
- 17b: kantige Vertiefung
- 18: Nutflanke
- 19: Drehmomentübertragende Fläche
- 20: Zentrierelement
- 21: Zylinderstift
- 22: Zentrierbohrung
- 23: Druckausgleichsbohrung
- 24: Formschlusselement
- 25: Klauenkupplung
- 26: Magnet
- 27: Sprengring
- 28: Erhebung

## Patentansprüche

1. Rotortasse (1), in welcher ein Fasermaterial verspinnbar ist, mit einer Kupplungsvorrichtung (4) zur lösbaren Verbindung mit einem dafür vorgesehenen Rotorschaft (2), wobei die Kupplungsvorrichtung (4) wenigstens ein Verbindungsmittel (6) zur Drehmomentübertragung von dem dafür vorgesehenen Rotorschaft (2) auf die Rotortasse (1) und zur axialen Sicherung der Rotortasse (1) an dem dafür vorgesehenen Rotorschaft (2) und wenigstens ein Zentriermittel (7) zur Zentrierung der Rotortasse (1) an dem dafür vorgesehenen Rotorschaft (2) umfasst, **dadurch gekennzeichnet, dass** das wenigstens eine Zentriermittel (7) einen kegelstumpfförmigen Fortsatz (8) oder eine kegelstumpfförmige Aufnahme (10) an der Rotortasse (1) umfasst oder
dass das wenigstens eine Zentriermittel (7) wenigstens ein separat von dem wenigstens einen Verbindungsmitteln (6) ausgebildetes Zentrierelement (20) beinhaltet, wobei das Zentrierelement (20) einen in der Rotortasse (1) festgelegten Zylinderstift (21) oder eine in der Rotortasse (1) angeordnete Zentrierbohrung (22) umfasst und wobei das wenigstens eine Verbindungsmittel (6) einen vorzugsweise zylindrischen Fortsatz (8) an der Rotortasse umfasst.

2. Rotortasse nach dem vorhergehenden Anspruch, **dadurch gekennzeichnet, dass** der Fortsatz (8), insbesondere der kegelstumpfförmige Fortsatz (8), einen Ansatz (16a, 16b) oder die Aufnahme (10), insbesondere die kegelstumpfförmige Aufnahme (10), eine Vertiefung (17a, 17b) aufweist, wobei der Ansatz (16a, 16b) oder die Vertiefung (17a, 17b) vorzugsweise rotationssymmetrisch, insbesondere zylindrisch, ausgebildet ist.

3. Rotortasse nach einem oder mehreren der vorhergehenden Ansprüche, **dadurch gekennzeichnet, dass** der kegelstumpfförmige Fortsatz (8) eine ringförmig umlaufende Erhebung (28), insbesondere einen Wulst, aufweist, wobei vorzugsweise die Erhebung (28) in einem der Rotortasse (1) zugewandten Bereich des Fortsatzes (8) angeordnet ist.

4. Rotortasse nach einem oder mehreren der vorhergehenden Ansprüche, **dadurch gekennzeichnet, dass** das Verbindungsmittel (6) zumindest teilweise einteilig mit dem Zentriermittel (7) ausgebildet ist.

5. Rotortasse nach einem oder mehreren der vorhergehenden Ansprüche, **dadurch gekennzeichnet, dass** der Fortsatz (8) einteilig an die Rotortasse (1) angeformt ist.

6. Rotortasse einem oder mehreren der vorhergehenden Ansprüche, **dadurch gekennzeichnet, dass** der Zylinderstift (21) in der Rotortasse (1) festgelegt, insbesondere eingepresst, ist und dass der Zylinderstift (21) eine Druckausgleichsbohrung (23) aufweist.

7. Rotortasse nach einem oder mehreren der vorhergehenden Ansprüche, **dadurch gekennzeichnet, dass** die Aufnahme (10) eine erste Umfangsnut (11) oder der Fortsatz (8) eine zweite Umfangsnut (12) aufweist, wobei vorzugsweise ein Sicherungselement (13), insbesondere ein Sprengring (27) aus Federstahl oder ein O-Ring (9) aus einem elastomeren Material, zur axialen Sicherung der Rotortasse (1) an dem dafür vorgesehenen Rotorschaft (2) als Verbindungsmittel (6) in die erste Umfangsnut (11) der Aufnahme (10) oder in die zweite Umfangsnut (12) des Fortsatzes (8) eingesetzt ist.

8. Rotortasse nach einem der beiden vorhergehenden Ansprüche, **dadurch gekennzeichnet, dass** die erste Umfangsnut (11) der Aufnahme (10) eine schräge Nutflanke (18) aufweist.

9. Rotortasse nach einem oder mehreren der vorhergehenden Ansprüche, **dadurch gekennzeichnet, dass** das Sicherungselement (13) zugleich der Drehmomentübertragung von dem dafür vorgesehenen Rotorschaft (2) auf die Rotortasse (1) dient.

10. Rotortasse nach einem oder mehreren der vorhergehenden Ansprüche, **dadurch gekennzeichnet, dass** der Fortsatz (8) oder die Aufnahme (10) wenigstens ein Formschlusselement (24) aufweisen und eine formschlüssige Verbindung zur Drehmomentübertragung von dem dafür vorgesehenen Rotorschaft (2) auf die Rotortasse (1) bilden.

11. Rotortasse nach einem oder mehreren der vorhergehenden Ansprüche, **dadurch gekennzeichnet, dass** das wenigstens eine Formschlusselement (24) des Fortsatzes (8) an dem zylindrischen Ansatz (16a, 16b) oder das wenigstens eine Formschlusselement (24) der Aufnahme (10) in der Vertiefung (17a, 17b) angeordnet ist.

12. Offenend-Spinnrotor (14) mit einer Rotortasse (1), in welcher ein Fasermaterial verspinnbar ist, und mit einem Rotorschaft (2), über welchen der Spinnrotor (14) in einer Lagerung, insbesondere in einer Magnetlagerung, abstützbar ist, wobei der Rotorschaft (2) und die Rotortasse (1) über eine Kupplungsvorrichtung (4) lösbar miteinander verbunden sind und wobei die Kupplungsvorrichtung (4) Verbindungsmittel (6) zur Drehmomentübertragung zwischen der Rotortasse (1) und dem Rotorschaft (2) und zur axialen Sicherung der Rotortasse (1) an dem Rotorschaft (2) und Zentriermittel (7) zur Zentrierung von Rotortasse (1) und Rotorschaft (2) umfasst, **dadurch gekennzeichnet, dass** die Zentriermittel (7) einen kegelstupfförmigen Fortsatz (8) an einem der beiden Bauteile Rotortasse (1) oder Rotorschaft (2) umfassen, welcher in eine kegelstumpfförmige Aufnahme (10) des jeweils anderen Bauteils lösbar einsetzbar ist oder
dass die Zentriermittel (7) wenigstens ein separat von den Verbindungsmitteln (6) ausgebildetes Zentrierelement (20) beinhalten, wobei das Zentrierelement (20) einen Zylinderstift (21) umfasst, welcher in einem der beiden Bauteile Rotortasse (1) oder Rotorschaft (2) festgelegt ist, insbesondere eingepresst ist, und in eine Zentrierbohrung (22) des jeweils anderen Bauteils lösbar einsetzbar ist und wobei die Verbindungsmittel (6) einen vorzugsweise zylindrischen Fortsatz (8) an der Rotortasse (1) sowie eine vorzugsweise zylindrische Aufnahme (10) an dem Rotorschaft (2) umfassen, in welche der Fortsatz (8) der Rotortasse (1) einbringbar ist.

13. Offenend-Spinnrotor nach dem vorhergehenden Anspruch, **dadurch gekennzeichnet, dass** der Fortsatz (8), insbesondere der kegelstumpfförmige Fortsatz (8), einen Ansatz (16a, 16b) aufweist und die Aufnahme (10), insbesondere die kegelstumpfförmige Aufnahme (10), eine Vertiefung (17a, 17b) aufweist, wobei der Ansatz (16a, 16b) und die Vertiefung (17a, 17b) vorzugsweise rotationssymmetrisch, insbesondere zylindrisch, ausgebildet sind.

14. Offenend-Spinnrotor nach einem der beiden vorhergehenden Ansprüche, **dadurch gekennzeichnet, dass** der Zylinderstift (21) in dem Rotorschaft (2) festgelegt, insbesondere eingepresst, ist.

15. Offenend-Spinnrotor nach einem der Ansprüche 12 - 14, **dadurch gekennzeichnet, dass** die Verbindungsmittel (6) zumindest teilweise einteilig mit den Zentriermitteln (7) ausgebildet sind.

16. Offenend-Spinnrotor mit einer Rotortasse (1) nach einem der Ansprüche 1 - 11.
